# EUROPÄISCHE PATENTSCHRIFT

(11) **EP 2 439 474 B1**
(45) Veröffentlichungstag und Bekanntmachung des Hinweises auf die Patenterteilung: **03.06.2015**
(21) Anmeldenummer: 11182781.2
(22) Anmeldetag: 26.09.2011
(51) Int. Cl.: F26B 5/04, F26B 25/08, F26B 23/00

(54) **Einrichtung zum Trocknen eines Maschinenteils mit einer Vakuumtrockenkammer**
Device for drying a machine part with a vacuum drying chamber
Dispositif de séchage d'un élément de machine doté d'une chambre sèche sous vide

(30) Priorität: 07.10.2010 AT 16772010
(43) Veröffentlichungstag der Anmeldung: 11.04.2012
(73) Patentinhaber: Knoth, Hubert, 1190 Wien (AT); Knoth, Petra, 2201 Gerasdorf-Föhrenhin (AT); Seefeldner, Christian, 2700 Wr. Neustadt (AT); Knoth-Bambule, Rudolf, 2201 Gerasdorf-Förenhain (AT)
(72) Erfinder: Knoth, Hubert, 1190 Wien (AT); Knoth, Petra, 2201 Gerasdorf-Föhrenhin (AT); Seefeldner, Christian, 2700 Wr. Neustadt (AT); Knoth-Bambule, Rudolf, 2201 Gerasdorf-Förenhain (AT)
(74) Vertreter: Babeluk, Michael

(56) Entgegenhaltungen:
- EP-A2- 0 177 774
- US-A- 2 952 922
- US-A- 3 986 268

## Beschreibung

Die Erfindung betrifft eine Einrichtung zum Trocknen eines Maschinenteils mit einer Vakuumtrockenkammer, an welcher zumindest eine Evakuiereinrichtung angeschlossen ist, wobei die Vakuumtrockenkammer einen modulartigen Aufbau mit zumindest zwei miteinander lösbar verbundenen Kammermodulen aufweist und jedes Kammermodul aus zumindest einem Bodenteil und einem Deckenteil, und vorzugsweise zumindest zwei Seitenteilen zusammengefügt ist.

Die US 2,952,922 A offenbart eine Vorrichtung zum Vakuumtrocknen von temperaturempfindlichen Gegenständen gemäß dem Oberbegriff des Anspruchs 1, welche aus mehreren Kammermodulen besteht, die an einander zugewandten offenen Stirnseiten miteinander verschraubt sind. Jedes Kammermodul ist aus zumindest einem Bodenteil, einem Deckenteil und Seitenteilen zusammengefügt.

Die US 3,672,068 A beschreibt eine Vorrichtung zum Trocknen von Materialien mit einer Vakuumpumpe, deren Abwärme zum Trocknen in die Trocknungskammer der Vorrichtung geführt wird.

Aus der GB 452 546 A ist eine modulartig aufgebaute Vorrichtung zum Trocknen von Getreide bekannt, wobei die einzelnen Kammermodule an einander zugewandten offenen Stirnseiten miteinander verschraubt sind.

Eine weitere Einrichtung zum Trocknen eines mit einer Reinigungsflüssigkeit behandelten Werkstückes ist aus der DE 4237 335 A1 bekannt.

Aus der GB 2 268 253 A1 ist eine Einrichtung zum Trocknen von Kugellagern bekannt, welche ein zweiteiliges Gehäuse aufweist, wobei die beiden Gehäusehälften über eine Dichtung abgedichtet sind.

Aus der österreichischen Patentanmeldung A 608/2010 ist eine Einrichtung zum Trocknen eines Maschinenteiles mit einer Vakuumtrockenkammer bekannt, an welche zumindest eine Evakuiereinrichtung angeschlossen ist, deren Wände einstückig ausgebildet sind. Durch die einstückige Ausführung können Leckagen weitgehend verhindert werden.

Insbesondere bei größeren Werkstücken ist die einstückige Ausbildung der Vakuumtrockenkammer allerdings sehr kostenaufwändig. Weiters ist es nachteilig, dass für unterschiedlich große Maschinenteile unterschiedliche Vakuumtrockenkammern eingesetzt werden müssen.

Es ist die Aufgabe der vorliegenden Erfindung auf möglichst einfache Weise Vakuumtrockenkammer für unterschiedlich große Maschinenteile zu realisieren.

Erfindungsgemäß wird dies dadurch erreicht, dass der Bodenteil den Boden und zumindest einen Teil zumindest einer Seitenwand und/ oder dass der Deckenteil die Decke und zumindest einen Teil zumindest einer Seitenwand ausbildet.

Das Zusammenfügen der Boden- bzw. Deckenteile mit den Seitenwänden erfolgt somit nicht im Bereich der unteren bzw. oberen Kanten der Kammern, sondern in Abstand davon im Bereich der seitlichen Kammerwandflächen. Dies hat den Vorteil, dass die Seitenteile mit den Decken- bzw. Bodenteilen einfach und zuverlässig, beispielsweise durch Schweißen verbunden werden können, wobei schwer zugängliche und schwer überprüfbare Fügestellen im Bereich der Kanten und Ecken vermieden werden. Dies ermöglicht es, die Ausschuss- und Korrekturrate bei der Fertigung der Kammer wesentlich zu reduzieren, die Herstellung zu vereinfachen, sowie eine höhere Zuverlässigkeit zu erreichen.

Vorzugsweise sind die Kammermodule an zwei aneinander zugewandten offenen Stirnseiten miteinander verbunden. Die Kammermodule können dabei miteinander durch Schrauben verbunden sein. Dabei kann vorgesehen sein, dass jedes Kammermodul an seiner Stirnseite offen ausgeführt ist und einen Boden, eine Decke und zwei Seitenwände aufweist. Dies ermöglicht es die Vakuumtrockenkammer in Längsrichtung beliebig zu erweitern, um unterschiedlich lange Maschinenteile zu behandeln.

Um das zu evakuierende Volumen möglichst klein zu halten, ist vorgesehen, dass die Innenwände der Vakuumtrockenkammer zumindest teilweise dem zu trocknenden Maschinenteil nachgeformt sind, wobei vorzugsweise die Seitenwände und/oder die Decke der Vakuumtrockenkammer parallel zu einem Profil des Maschinenteils gestaltet ist, wobei vorzugsweise die Seitenwände und/oder die Decke der Vakuumtrockenkammer so gestaltet sind, dass - bei in die Vakuumtrockenkammer eingefahrenem oder eingelegtem Maschinenteil - der Normalabstand zwischen jeder Innenfläche der Seitenwände und/oder Decke und dem Maschinenteil an jeder Stelle weniger als 100 mm, vorzugsweise weniger als 50 mm, besonders vorzugsweise weniger als 5 mm beträgt. Durch die exakte Anpassung der Kammerkontur an das zu trocknende Werkstück und das dadurch sehr geringe Luftvolumen in der Vakuumtrockenkammer ist mit relativ wenig Energieeinsatz eine ausreichende Evakuierung und somit Trocknung problemlos möglich.

Die Evakuierung der Vakuumtrockenkammer ist mit relativ großer Temperaturabsenkung verbunden. Um die thermische Belastung des Maschinenteiles in Grenzen zu halten, ist im Rahmen der Erfindung vorgesehen, dass die Evakuiereinrichtung und die Vakuumtrockenkammer über ein Kühlsystem miteinander thermisch verbunden sind, wobei die Abwärme der Evakuiereinrichtung der Vakuumtrockenkammer zuführbar ist. Besonders vorteilhaft ist es, wenn das Kühlsystem einen der Evakuiereinrichtung zugeordneten ersten Wärmetauscher und einen der Vakuumtrockenkammer zugeordneten zweiten Wärmetauscher aufweist, wobei die beiden Wärmetauscher thermisch über ein Kühlmedium miteinander verbunden sind, und wobei vorzugsweise der zweite Wärmetauscher an zumindest einer Außenfläche der Vakuumtrockenkammer angeordnet ist. Um potentielle zusätzliche Leckage-Stellen zu vermeiden ist der zweite Wärmetauscher an einer Außenfläche und nicht im Inneren der Vakuumtrockenkammer angeordnet.

Die Erfindung wird im folgenden anhand der Figuren näher erläutert. Es zeigen:
- Fig. 1: bis Fig. 3 eine erfindungsgemäße Einrichtung in verschiedenen Schrägansichten;
- Fig. 4: ein Kammermodul in einer Schrägansicht;
- Fig. 5: ein Kammermodul in einer weiteren Schrägansicht;
- Fig. 6: und Fig. 7 ein Kammermodul in Explosionsdarstellungen.

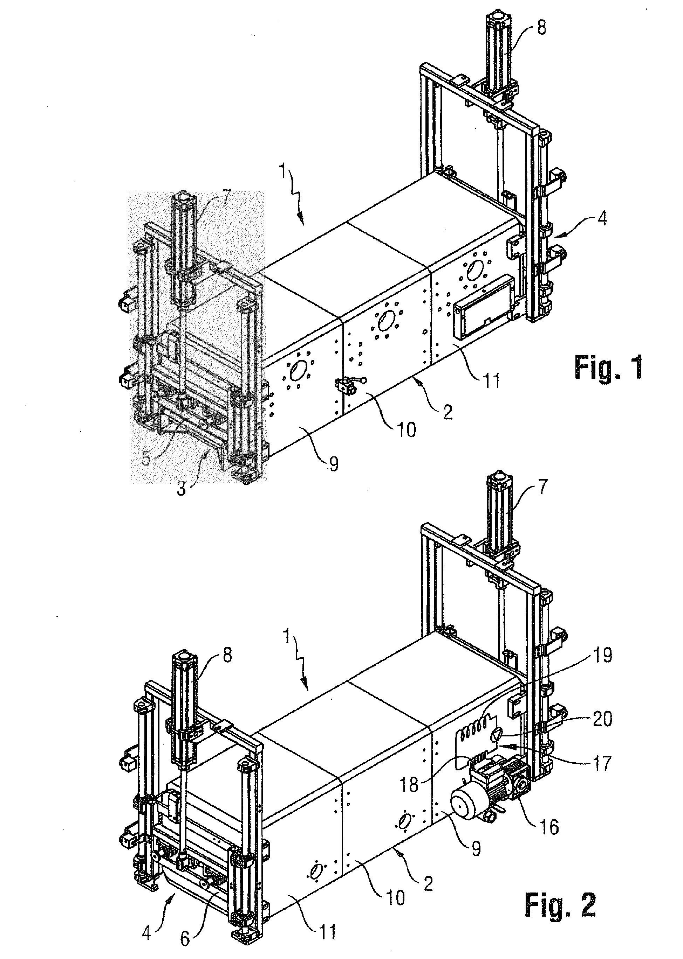

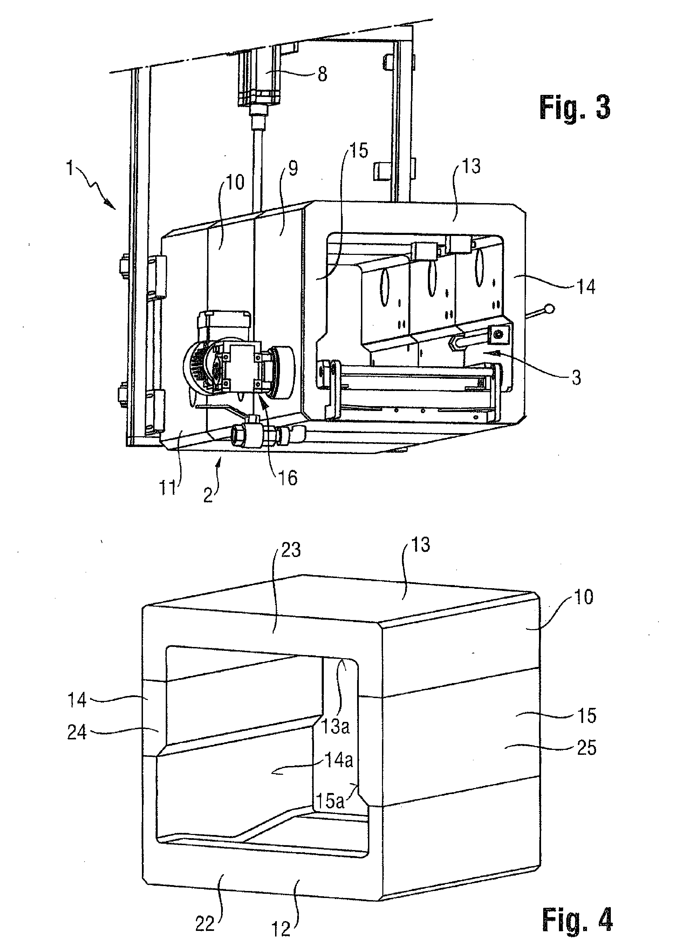

Die in den Figuren 1 bis 3 dargestellte Einrichtung 1 zum Trocknen von Maschinenteilen, wie zum Beispiel Motorblöcken, befindet sich zum Beispiel in einer Bearbeitungsstraße, nachfolgend einer nicht weiter dargestellten Reinigungsstation, wobei die zu trocknenden Maschinenteile beispielsweise über Rollenbahnen der Einrichtung 1 zugeführt und wieder von dieser wegbefördert werden, wie dies zum Beispiel in der österreichischen Patentanmeldung A 608/2010 gezeigt ist. Die Einrichtung 1 ist mit einer Vakuumtrockenkammer 2 ausgestattet, welche im Ausführungsbeispiel eine Eintrittsöffnung 3 und eine Austrittsöffnung 4 zum Zu-und Wegfördern des zu trocknenden Maschinenteiles aufweist, welche durch automatisch betätigbare Türen 5, 6 geöffnet oder gasdicht verschlossen werden können. Die über pneumatische, hydraulische oder elektrische Aktuatoren 7, 8 betätigbaren Türen 5, 6 sind als Schieber ausgebildet.

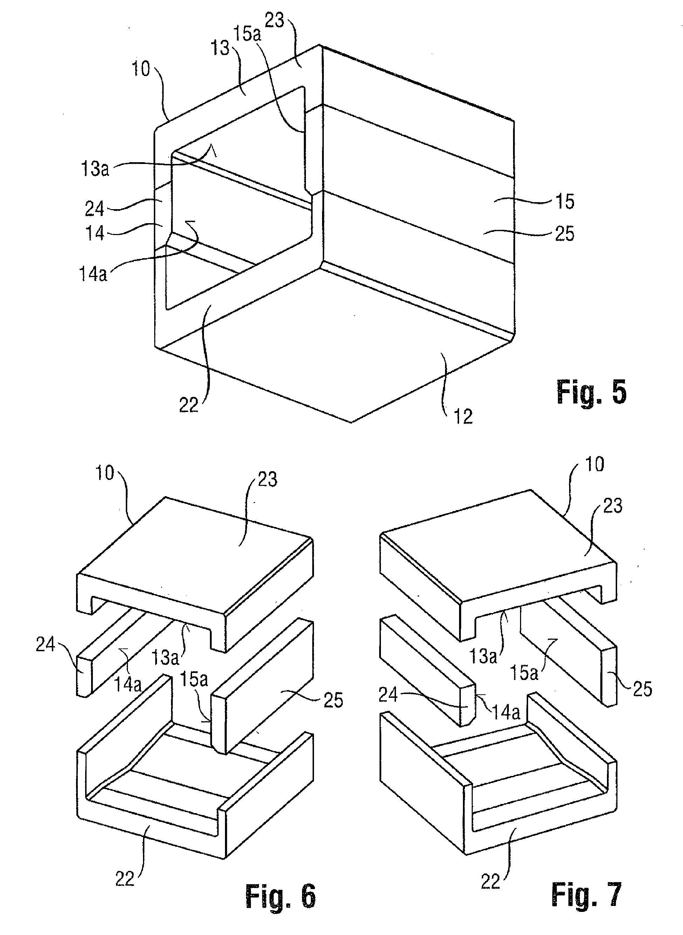

Die Vakuumtrockenkammer 2 weist einen modulartigen Aufbau auf, wobei zumindest zwei Kammermodule 9, 10, 11 an ihren jeweiligen einander zugewandten offenen Stirnseiten miteinander durch Schrauben lösbar verbunden sind. Jedes Kammermodul 9, 10, 11 besteht dabei aus einem Boden 12, einer Decke 13 und Seitenwänden 14, 15. In der in den Figuren 6 und 7 dargestellten Ausführungsvariante ist jedes Kammermodul 9, 10, 11 aus den einzelnen Elementen Bodenteil 22, Deckenteil 23 und Seitenteile 24, 25 zusammengefügt. Der Bodenteil 22 kann dabei den Boden 12 und einen Teil der Seitenwände 14, 15 des Kammermoduls 9, 10 11, der Deckenteil 23, die Decke 13 und einen Teil der Seitenwände 14, 15, ausbilden. Es ist aber auch möglich, jedes Kammermodul 9, 10, 11 einstückig auszuführen, beispielsweise aus dem Vollen zu fräsen.

Zumindest eine Seitenwand 14, 15 eines Kammermoduls 9, 10, 11 weist einen Anschluss für eine Evakuiereinrichtung 16 auf, welche im Ausführungsbeispiel seitlich der Vakuumtrockenkammer 2 angeordnet ist. Die Evakuiereinrichtung 16 ist über ein Kühlsystem 17, welches einen der Evakuiereinrichtung 16 zugeordneten ersten Wärmetauscher 18 und einen der Vakuumtrockenkammer 2 zugeordneten zweiten Wärmetauscher 19, sowie eine Kühlmittelpumpe 20 aufweist, thermisch mit der Vakuumtrockenkammer 2 verbunden. Auf diese Weise werden unter Ausnutzung der Abwärme der Evakuiereinrichtung 16 zu tiefe Temperaturen in der Vakuumtrockenkammer 2 und somit eine zu starke thermische Belastung des zu trocknenden Maschinenteiles vermieden.

Um ein schnelles Evakuieren zu ermöglichen, sind die Seitenwände 14, 15, sowie die Decke 13 im Bereich des den Maschinenteil aufnehmenden Bereiches der Vakuumtrockenkammer 2 dem zu trocknenden Maschinenteil nachgeformt. Dadurch kann das zu evakuierende Volumen so klein wie möglich gehalten werden. Die Innenflächen 14a, 15a, 13a der Seitenwände 14, 15 und der Decke 13 der Vakuumtrockenkammer 2 sind dabei parallel zum Profil des Maschinenteils - in Förderrichtung betrachtet, ausgebildet und so gestaltet, dass - bei in die Vakuumtrockenkammer 2 eingefahrenen oder eingelegten Maschinenteil - der Normalabstand zwischen jeder Innenfläche 14a, 15a, 13a der Seitenteile 14, 15 und der Decke 13 und dem Maschinenteil an jeder Stelle weniger als 100 mm, vorzugsweise weniger als 50 mm, besonders vorzugsweise weniger als 5 mm beträgt.

Der Maschinenteil gelangt aus der Reinigungsstation kommend über eine Rollenbahn einer Bearbeitungsstraße in die geöffnete Vakuumtrockenkammer 2. Der Maschinenteil wird dabei lagegenau in die Vakuumtrockenkammer 2 eingebracht, so dass zwischen Maschinenteil und den Innenflächen 14a, 15a, 13a der Seitenwände 14, 15 und der Decke 13 im Wesentlichen ein gleichmäßiger Abstand zwischen 0 mm und 100 mm ausgebildet ist. Danach wird die Vakuumtrockenkammer 2 gasdicht mittels der Türen 5, 6 verschlossen und der Druck von etwa 1 bar Umgebungsdruck auf etwa 0,2 bar abgesenkt. Nach einer vordefinierten Dauer wird die Vakuumtrockenkammer 2 wieder belüftet und gegebenenfalls mit einem Spülmedium gespült. Durch die Zwischenspülung wird entstandene Restfeuchtigkeit aus der Vakuumtrockenkammer 2 entfernt. Dann kann die Vakuumtrockenkammer 2 nochmals evakuiert werden. Das Zwischenspülen kann gegebenenfalls wiederholt werden. Nach dem letzten Evakuiervorgang wird die Vakuumtrockenkammer 2 belüftet und das trockene Maschinenteil durch die geöffnete Austrittsöffnung 4 entfernt.

Der modulartige Aufbau der Vakuumtrockenkammer 2 ermöglicht es, Maschinenteile unterschiedlicher Größen auf kostengünstige Weise zu behandeln, da die Kammermodule 9, 10, 11 für unterschiedlich lange Maschinenteile durch Variation der Anzahl der zusammengefügten Kammermodule 9, 10, 11 flexibel eingesetzt werden können.

## Patentansprüche

1. Einrichtung (1) zum Trocknen eines Maschinenteils mit einer Vakuumtrockenkammer (2), an welcher zumindest eine Evakuiereinrichtung (16) angeschlossen ist, wobei die Vakuumtrockenkammer einen modulartigen Aufbau mit zumindest zwei miteinander lösbar verbundenen Kammermodulen (9, 10, 11) aufweist und jedes Kammermodul (9, 10, 11) einen Boden (12), eine Decke (13) und Seitenwände (14, 15) aufweist und aus zumindest einem Bodenteil (22) und einem Deckenteil (23), und vorzugsweise zumindest zwei Seitenteilen (24, 25) zusammengefügt ist, **dadurch gekennzeichnet, dass** der Bodenteil (22) den Boden (12) und einen Teil der Seitenwände (14, 15) und dass der Deckenteil (23) die Decke (13) und einen Teil der Seitenwände (14,15) ausbildet.

2. Einrichtung (1) nach Anspruch 1, **dadurch gekennzeichnet, dass** die Kammermodule (9, 10, 11) an zwei aneinander zugewandten offenen Stirnseiten miteinander verbunden sind.

3. Einrichtung (1) nach Anspruch 2, **dadurch gekennzeichnet, dass** die Kammermodule (9, 10, 11) miteinander verschraubt sind.

4. Einrichtung (1) nach einem der Ansprüche 1 bis 3, **dadurch gekennzeichnet, dass** jedes Kammermodul (9, 10, 11) an seiner Stirnseite offen ausgeführt ist.

## Claims

1. Apparatus (1) for drying an engine part, comprising a vacuum drying chamber (2) to which is attached at least one evacuating device (16), said vacuum drying chamber being built as a modular assembly of at least two releasably connected chamber modules (9, 10, 11), where each chamber module (9, 10, 11) has a bottom (12), a ceiling (13) and side walls (14, 15) and is thus assembled from at least one bottom part (22), one ceiling part (23) and preferably at least two lateral parts (24, 25), **characterised in that** the bottom part (22) forms the bottom (12) and part of the side walls (14, 15), and the ceiling part (23) forms the ceiling (13) and part of the side walls (14, 15).

2. Apparatus (1) according to claim 1, **characterised in that** the chamber modules (9, 10, 11) are connected with each other via two open front sides facing each other.

3. Apparatus (1) according to claim 2, **characterised in that** the camber modules (9, 10, 11) are held together by screws.

4. Apparatus (1) according to any of claims 1 to 3, **characterised in that** each chamber module (9, 10, 11) is open at its front side.

## Revendications

1. Dispositif (1) de séchage d'une partie de machine comprenant une chambre de séchage sous vide (2) à laquelle est relié au moins un dispositif de mise sous vide (16), cette chambre de séchage sous vide ayant une configuration modulaire comportant au moins deux modules de chambre (9, 10, 11) reliés entre eux de manière amovible, et, chaque module de chambre (9, 10, 11) comprend un fond (12) un couvercle (13) et des parois latérales (14, 15), et est constitué par l'assemblage d'au moins une partie de fond (22) et d'une partie de couvercle (23), et de préférence d'au moins deux parties latérales (24, 25),
**caractérisé en ce que**
la partie de fond (22) forme le fond (12) et une partie des parois latérales (14, 15) et la partie de couvercle (23) forme le couvercle (13) et une partie des parois latérales (14, 15).

2. Dispositif (1) conforme à la revendication 1,
**caractérisé en ce que**
les modules de chambre (9, 10, 11) sont reliés au niveau de deux côtés frontaux ouverts tournés l'un vers l'autre.

3. Dispositif (1) conforme à la revendication 2,
**caractérisé en ce que**
les modules de chambre (9, 10, 11) sont vissés les uns aux autres.

4. Dispositif (1) conforme à l'une des revendications 1 à 3,
**caractérisé en ce que**
chaque module de chambre (9, 10, 11) est ouvert sur son côté frontal.
